# EUROPEAN PATENT APPLICATION

(11) **EP 2 557 823 A1**
(43) Date of publication of application: **13.02.2013**
(21) Application number: 11780086.2
(22) Date of filing: 01.04.2011
(51) Int. Cl.: H04W 4/24, H04W 48/16, H04W 88/18, H04L 12/24

(54) **AUTHENTICATION AUTHORIZATION AND ACCOUNTING SERVER AND MESSAGE PROCESSING METHOD THEREOF**

(30) Priority: 21.04.2010 CN 201010153759
(71) Applicant: ZTE Corporation, Shenzhen, Guangdong 518057 (CN)
(72) Inventor: ZHOU, Junchao, Guangdong 518057 (CN)
(74) Representative: South, Nicholas Geoffrey
(86) International application number: PCT/CN2011/072385
(87) International publication number: WO 2011/140865

(57) **Abstract**

The disclosure discloses an AAA server and a message processing method thereof. The AAA server comprises: a bottom layer interface module, a policy distribution module and the plurality of service processing modules, wherein the bottom layer interface module is configured to provide a message transmission interface between the policy distribution module and access networks of different network modes, the policy distribution module is configured to distribute messages from the access networks of different network modes to the plurality of service processing modules, and each service processing module of the the plurality of service processing modules is configured to perform access processing for a received message. The disclosure reduces the operation cost.

## Description

### Field of the Invention

The disclosure relates to the field of communication, and more particularly to an Authentication Authorization and Accounting (AAA) server and a message processing method thereof.

### Background of the Invention

In Packet Switching (PS) domain system equipment of telecommunication networks, an AAA server plays an important role as an AAA center when a terminal user performs a PS service.

The AAA server needs to authenticate the identity of the user using the PS service, authorizes related parameters of the PS service used by the user, and records an original bill of the user so as to provide it to an accounting center for user charging management. AAA functions of the AAA server is indispensible for a terminal of a Digital Subscriber Line of unknown type (xDSL) to access the Internet and for a WiMAX mobile terminal to access the Internet via a hotspot.

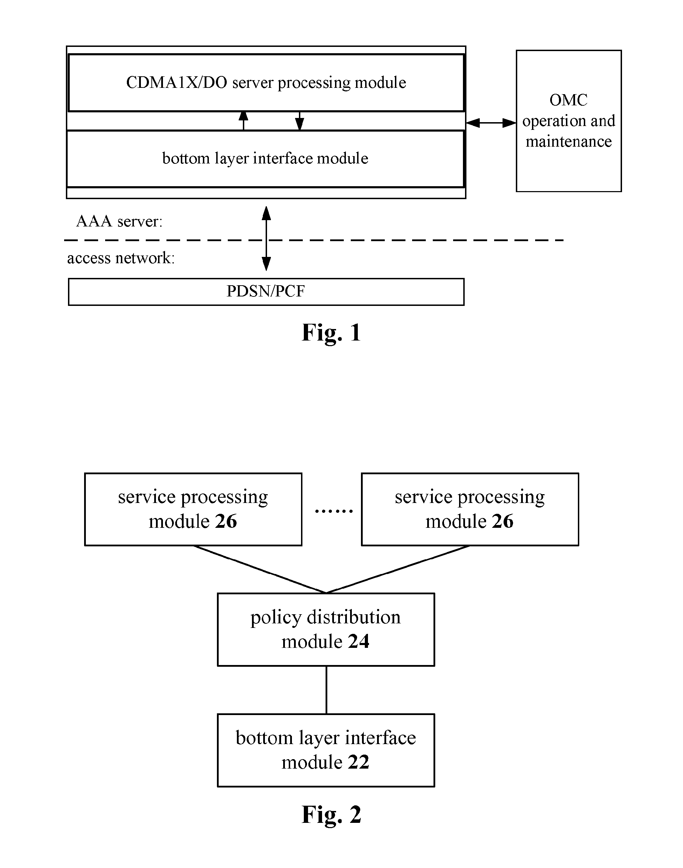

In the initial phase of the development of PS domain of telecommunication networks, each operator uses a single network instead of using networks of different modes integrally. For instance, China Telecom operates a fixed network, China Mobile operates a Global System for Mobile Communication (GSM) network, etc. Accordingly, an AAA server is generally implemented only based on a single service mode. That is, an AAA server processes access messages of only one network mode. For example, as shown in Fig. 1, an AAA server for a Code Division Multiple Access (CDMA) network comprises the following modules:
a bottom layer interface module, configured to perform interface connection, link connection and maintenance etc. for the CDMA network; and
a CDMA1X/DO service processing module, configured to process a CDMA PS access service.

With the development of telecommunication network technology, policy support and changes of operation demands, more and more network modes are supported by operators. A terminal can access the Internet by different network modes. Accordingly, different AAA servers need to be configured for different network modes, which increases the operation cost.

### Summary of the Invention

The main purpose of the disclosure is to provide an AAA server and a message processing method thereof to at least solve the problem above.

According to an aspect of the disclosure, an AAA server is provided, comprising: a bottom layer interface module, a policy distribution module and a plurality of service processing modules, wherein the bottom layer interface module is configured to provide a message transmission interface between the policy distribution module and access networks of different network modes; the policy distribution module is configured to distribute messages from the access networks of different network modes to different service processing modules of the plurality of service processing modules; and each service processing module of the plurality of service processing modules is configured to perform access processing for a received message.

The policy distribution module comprises: a searching module, configured to search in a preconfigured corresponding relationship between the plurality of service processing modules and attribute information of the messages, for a service processing module corresponding to the message from an access network; and a sending module, configured to send the message to the service processing module found by the searching module.

The attribute information comprises: address information of the message, wherein the address information comprises at least one of: an IP address and a port.

The policy distribution module comprises: a determination module, configured to, according to an attribute field indicating the network mode of the access network in the message, determine the service processing module corresponding to the message; and a sending module, configured to send the message to the service processing module determined by the determination module.

The determination module comprises: a first determination module configured to determine the service processing module corresponding to the message according to a type of the attribute field; and/or a second determination module configured to determine the service processing module corresponding to the message according to a value in the attribute field.

The each service processing module is configured to accept starting or closing configuration of an Operations and Maintenance Center (OMC) operation and maintenance module for the each service processing module.

The each service processing module is further configured to return a result of processing the message to the policy distribution module, and the policy distribution module is further configured to return the result of processing the message to the bottom layer interface module.

The each service processing module of the plurality of service processing modules is connected to the policy distribution module by a Common Object Request Broker Architecture (CORBA)/Component Object Model (COM)/internal custom interface.

According to another aspect of the disclosure, a message processing method of the AAA server is provided, comprising steps of: a bottom layer interface module in the AAA server receiving messages from access networks of different network modes; the AAA server distributing the messages from the access networks of different network modes to different service processing modules of a plurality of service processing modules; and the plurality of service processing modules performing access processing for the received messages.

Distributing the messages of the access networks of different network modes to different service processing modules of the plurality of service processing modules by the AAA server comprises: searching in a preconfigured corresponding relationship between the plurality of service processing modules and attribute information of the messages, for a service processing module corresponding to a message from an access network, and sending the message to the service processing module corresponding to the message; and/or according to an attribute field indicating the network mode of the access network in the message, determining the service processing module corresponding to the message, and sending the message to the service processing module corresponding to the message.

Through the disclosure, the policy distribution module is applied to distributing messages from access networks of different network modes to different processing modules to be processed. This solution solves the problem in the related art that the operation cost is increased by the requirement for configuring AAA servers for various network modes. Multiple network modes are supported in one AAA server, reducing the operation cost.

### Brief Description of the Drawings

The drawings described herein provide a further understanding of the disclosure and constitute a part of the application. The exemplary embodiments of the disclosure and the illustrations thereof are used for explaining the disclosure, and are not for constituting an improper limitation to the disclosure. In the drawings:
Fig. 1 is a schematicdiagram of a logical structure of a single-service AAA server according to the related technology;
Fig. 2 is a structural block diagram of an AAA server according to an embodiment of the disclosure;
Fig. 3 is the first preferred structural block diagram of an AAA server according to an embodiment of the disclosure;
Fig. 4 is the second preferred structural block diagram of an AAA server according to an embodiment of the disclosure;
Fig. 5 is the third preferred structural block diagram of an AAA server according to an embodiment of the disclosure;
Fig. 6 is a block diagram of a logical structure of an AAA server according to embodiment 1 of the disclosure;
Fig. 7 is a flowchart of a message processing method of an AAA server according to an embodiment of the disclosure; and
Fig. 8 is a flowchart of a message processing method of an AAA server according to embodiment 3 of the disclosure.

### Detailed Description of the Embodiments

The disclosure will be described in detail hereinafter with reference to the drawings and in combination with the embodiments. It should be noted that, if there is no conflict, the embodiments of the application and the features in the embodiments can be combined with one another.

Fig. 2 is a structural block diagram of an AAA server according to an embodiment of the disclosure. As shown in Fig. 2, the AAA server comprises: a bottom layer interface module 22, a policy distribution module 24 and the plurality of service processing modules 26, wherein the bottom layer interface module 22 is configured to provide a message transmission interface between the policy distribution module 24 and access networks of different network modes, the policy distribution module 24 is configured to distribute messages from the access networks of different network modes to different service processing module 26, and the service processing module 26 is configured to perform access processing for a received message.

In related technologies, one AAA server can only perform access processing for messages from one access network of a specific network mode. The AAA server provided by the embodiments of the disclosure distributes the messages of the accesses network of different network modes to the plurality of service processing modules 26 by the policy distribution module 24. The inputted message is distributed to a corresponding service processing module according to the network mode of an access network corresponding to the message. Thus, this solution supports multiple network modes in one AAA server and reduces the operation cost of operators.

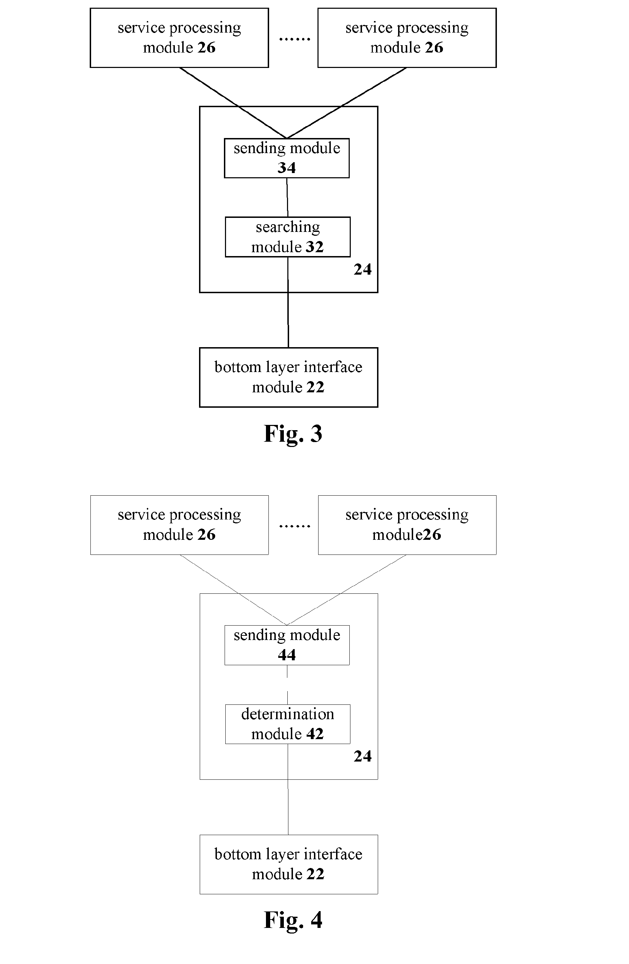

Fig. 3 is the first preferred structural block diagram of an AAA server according to an embodiment of the disclosure. As shown in Fig. 3, preferably, the policy distribution module 24 comprises: a searching module 32 configured to search in the preconfigured corresponding relationship between a service processing module 26 and attribute information of a message, for a service processing module 26 corresponding to the message from an access network; and a sending module 34 configured to send the message to the service processing module 26 found by the searching module 32.

The searching module 32 searches for the service processing module 26 corresponding to the message in the preconfigured corresponding relationship, so that the service processing module 26 can perform access processing correctly for the message. This solution is a simple processing process with a high processing efficiency.

It should be noted that the corresponding relationship above may be set by an operation and maintenance center (OMC) module.

Preferably, the attribute information above may include: address information of the message, wherein the address information comprises at least one of the followings: an IP address and a port. The corresponding service processing module 26 is searched for according to the address information of the message, so that a unique service processing module 26 corresponding to the message can be determined and located accurately. In addition, the processing efficiency is relatively high without an additional message parsing process.

Fig. 4 is the second preferred structural block diagram of an AAA server according to an embodiment of the disclosure. As shown in Fig. 4, preferably, the policy distribution module 24 comprises: a determination module 42 configured to, according to an attribute field indicating the network mode of the access network in the message, determine the service processing module 26 corresponding to the message; and a sending module 44 configured to send the message to the service processing module 26 determined by the determination module 42.

The service processing module 26 corresponding to the message is determined according to the attribute field indicating the network mode of the access network in the message, without configuring a corresponding relationship. Thus, this solution simplifies the maintenance process of the AAA server and saves the storage space of the AAA server.

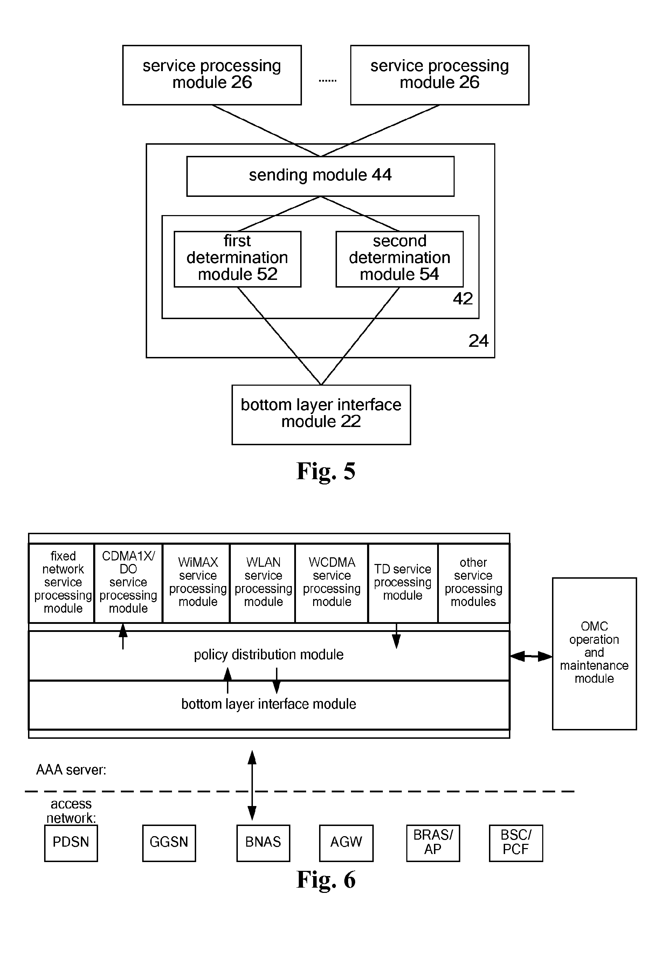

Fig. 5 is the third preferred structural block diagram of an AAA server according to an embodiment of the disclosure. As shown in Fig. 5, preferably, the determination module 42 comprises: a first determination module 52 configured to determine the service processing module 26 corresponding to the message according to the type of the attribute field; and/or a second determination module 54 configured to determine the service processing module 26 corresponding to the message according to a value in the attribute field. Fig. 5 shows the condition that the determination module 42 comprises: the first determination module 52 and the second determination module 54.

Preferably, each service processing module 26 is configured to accept the starting or closing configuration of the OMC operation and maintenance module for each service processing module 26. In other words, whether a loaded service processing module 26 is started can be determined by configuration of the OMC operation and maintenance module. Thus the loaded service processing modules are used flexibly and maintained conveniently.

Preferably, each service processing module 26 is further configured to return a result of processing the message to the policy distribution module 24, and the policy distribution module 24 is further configured to return the result of processing the message to the bottom layer interface module 22. In this case, the policy distribution module 24 may only perform unvarnished transmission for the result of processing the message without other processing. Thus the efficiency is relatively high.

Preferably, each service processing module of the plurality of service processing modules is connected to the policy distribution module by a CORBA/COM internal custom interface. Each service processing module 26 may be loaded to the AAA server online or separated from the AAA server conveniently according to requirements.

The embodiment 1 described below combines technical solutions of multiple preferred embodiments above.

### Embodiment 1

A multi-service integrated AAA logical structure is shown in Fig. 6, comprises: a bottom layer interface module, a policy distribution module and a plurality of service processing modules respectively processing services of different network modes.
(1) The service processing module comprises, but is not limited to:
   a fixed network service processing module, configured to process broadband services and narrowband services of a fixed network;
   a CDMA1X/DO service processing module, configured to process CDMA PS access services;
   a WiMAX service processing module, configured to process WiMAX services;
   a Wireless Local Area Network (WLAN) service processing module, configured to process wireless access services;
   a Wideband Code Division Multiple Access (WCDMA) service processing module, configured to process WCDMA services;
   a Time Division (TD) network access module, configured to process TD network services; and
   other service processing modules that may be assembled according to requirements, configured to process corresponding network access services.
      Whether each service module above is started or used is determined according to the configuration requirements (e.g. license control) of the OMC operation and maintenance module. Each service module complies with the general CORBA/COM internal custom interface, and can be loaded to the AAA server online or separated from the AAA server conveniently according to requirements.
   (2) The bottom layer interface module is configured to perform interface and link connection and maintenance etc. with networks of different modes. Specifically, the interface module is mainly configured to maintain network connections associated to each access network and detect link states; and is further configured to perform initial analysis and filter for illegal service request messages. Those incomplete or incorrectly coded messages can be rejected directly or discarded to avoid receiving a great amount of invalid messages by the service processing modules.
   (3) The policy distribution module is configured to distribute different services to different service processing modules according to different access distribution policies and return the processing result.

Access distribution policies of the policy distribution modules comprise, but are not limited to:
1) Distribution is performed according to pre-configuration from the OMC operation and maintenance module. For example, it is preconfigured in the OMC that a message from a certain IP address + port should be distributed to a certain service processing module. Distribution is performed according to configuration requirements if the condition is satisfied.
2) Distribution is performed according to whether some special attributes are contained in a specific message carried in an access request message. For example, if a vendor-ID contained in the message is an attribute of 5535, then the access message is regarded as an access request from a CDMA1x/DO network and can be distributed to a CDMA1X/DO service processing module to be processed.
3) The policy distribution module can perform distribution according to a value of an attribute field in the request message. For example, according to different values of the attribute field NAS-Port-Type carried in the message, the message may be distributed to different service processing modules. The NAS-Port-Type values are described as follows:
   - 0: Async
   - 1: Sync
   - 2: Integrated Services Digital Network (ISDN) Sync
   - 3: ISDN Async V.120
   - 4: ISDN Async V.110
   - 11: Symmetric DSL (SDSL)
   - 12: Asymmetric DSL, Carrierless Amplitude Phase Modulation (ADSL-CAP);
   - 13: Asymmetric DSL, Discrete Multi-Tone (ADSL-DMT);
   - 14: ISDN Digital Subscriber Line (IDSL);
   - 15: Ethernet;
   - 16: xDSL;
   - 17: Cable;
   - 18: Wireless-Other;
   - 19: Wireless-IEEE 802.11;
   - 201: VLAN (including VLAN on the Ethernet and Asynchronous Transfer Mode (ATM))
   - 202: ATM

When the value of NAS-Port-Type is 0, 1, 2, 3, 4, 5, 11, 12, 13, 14, 15, 16, 17, 201, 202, the service access request can be regarded as a service access request from a fixed network and be distributed to a fixed service processing module.

It should be noted that these three access distribution policies can be used jointly. Specifically, distribution is performed according to preset priorities of these three access distribution policies. For example, distribution is performed according to the 1), 2), 3) sequence above. That is, in the case that distribution according to policy 1) fails (e.g. the corresponding service processing module is not found), distribution is performed according to policy 2); and if failure occurs again, then distribution is performed according to policy 3).

With respect to physical deployment, the service processing modules, the policy distribution module and the bottom layer interface module may be separately deployed on different physical entities, or jointly deployed on the same physical entity. They can be deployed flexibly according to engineering requirements.

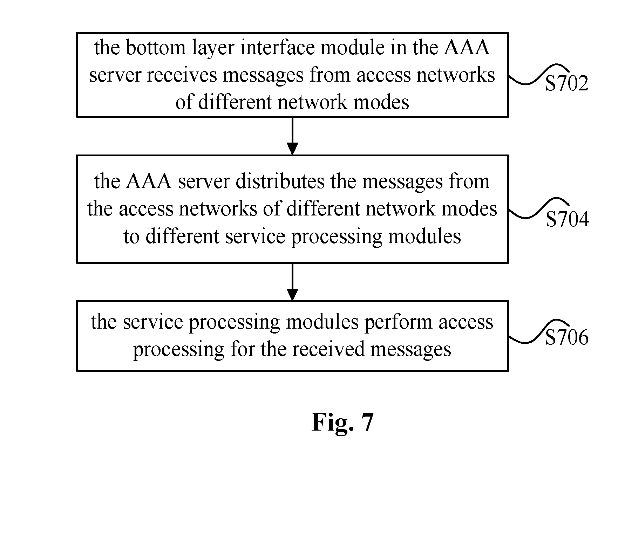

Fig. 7 is a flowchart of a message processing method of an AAA server according to an embodiment of the disclosure. The method comprises the following steps:
Step S702: the bottom layer interface module in the AAA server receives messages from access networks of different network modes;
Step S704: the AAA server distributes the messages from the access networks of different network modes to different service processing modules; and
Step S706: the service processing modules perform access processing for the received messages.

In related technologies, an AAA server can only perform access processing for messages from an access network of a specific network mode. The AAA server provided by the embodiments of the disclosure distributes the messages of the accesses networks of different network modes to different service processing modules by the policy distribution module. An inputted message is distributed to a corresponding service processing module according to the network mode of the access network corresponding to the message. Thus, this solution supports access compatibility with networks of different modes and structures. The access AAA of different kinds of terminals is realized on one AAA server. That is, integrated processing is realized by the AAA server for different services. For example, the AAA server can support access of fixed terminals or mobile terminals under networks of different structure, such as fixed network broadband, fixed network narrowband, CMDA1X/EvDO, WiMAX, WLAN, WCDMA PS, TD PS etc. Thus, the operation cost of operators is reduced.

Preferably, Step S704 comprises: searching in a preconfigured corresponding relationship between the plurality of service processing modules and attribute information of the messages, for a service processing module corresponding to the message from the access network, and sending the message to the service processing module corresponding to the message; and/or according to an attribute field indicating the network mode of the access network in the message, determining the service processing module corresponding to the message, and sending the message to the service processing module corresponding to the message.

In the method, the service processing module corresponding to the message is searched in the preconfigured corresponding relationship, so that the service processing module can perform access processing correctly for the message by a simple processing process with a relatively high processing efficiency. The service processing module corresponding to the message is determined according to the attribute field indicating the network mode of the access network in the message without configuring a corresponding relationship, thus simplifying the maintenance process of the AAA server and saving the storage space of the AAA server.

Preferably, the attribute information above may include: address information of the message, wherein the address information comprises at least one of the followings: an IP address and a port. The corresponding service processing module is searched for according to the address information of the message, so that a unique service processing module corresponding to the message can be determined and located accurately. In addition, the processing efficiency is relatively high without additional message parsing process.

Preferably, the process of determining the service processing module corresponding to the message according to the attribute field indicating the network mode of the access network in the message may be specifically implemented by at least one of the following methods:
(1) the corresponding service processing module is determined according to the type of the attribute field; and
(2) the corresponding service processing module is determined according to the value in the attribute field.

Preferably, the service processing module above may accept the starting or closing configuration of the OMC operation and maintenance module for the service processing module. By using the method, whether a loaded service processing module is started can be determined by configuration of the OMC operation and maintenance module. Thus the loaded service processing modules are used flexibly and maintained conveniently.

Preferably, after Step S706, the method may further comprise: the service processing module returns a result of processing the message to the bottom layer interface module so that subsequent processing can be performed.

Preferably, the service processing module can transmit data by a CORBA/COM/internal custom interface, wherein the data can comprise the message and/or the result of performing access processing for the message. By the method, various service processing modules can be loaded to the AAA server online or separated from the AAA server conveniently according to requirements.

The network modes include but are not limited to: networks of different structure, such as fixed network broadband, fixed network narrowband, CMDA1X/EvDO, WiMAX, WLAN, WCDMA PS, TD PS etc.

The embodiment 2 and 3 described below combine the technical solutions of multiple preferred embodiments above.

### Embodiment 2

This embodiment describes a deployment and application process of the AAA server above, specifically comprising the following steps.
Step 1: different service processing modules are assembled and installed. Specifically, different service processing modules are loaded according to engineering requirements. Alternatively, all of the service processing modules are loaded, and whether a corresponding service processing module is started is determined by the configuration control (License control item) of the OMC operation and maintenance module.
Step 2: the policy distribution module is deployed and configured. Specifically, the following several configuration methods may be adopted:
   1) a message from a certain IP address + port is designated to be distributed to a certain service processing module according to configuration of the configuration file of the OMC operation and maintenance module or the distribution module; there may be multiple configuration items for pre-configuration and distribution of IP addresses and ports of access network elements associated with the AAA server;
   2) the policy of performing forwarding according to whether some attribute fields are contained in the message is configured according to configuration of the configuration file of the OMC operation and maintenance module or the distribution module; and
   3) the policy of performing forwarding according to the value of an attribute field carried in the message is configured according to configuration of the configuration file of the OMC operation and maintenance module or the distribution module.
Step 3: the AAA server starts to work, forwards the received message according to a policy and returns response information after the processing of the corresponding service processing module is completed.

### Embodiment 3

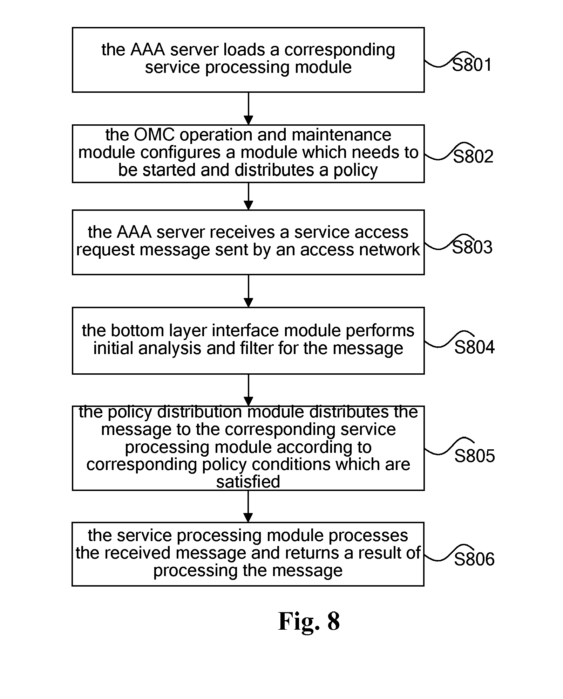

Fig. 8 is a flowchart of a message processing method of an AAA server according to embodiment 3 of the disclosure. The specific implementation process comprises the following steps.
Step S801: the AAA server loads a corresponding service processing module.
Step S802-1: the service processing module which needs to be started is configured by the OMC operation and maintenance module.
Step S802-2: the distribution policy is configured by the OMC operation and maintenance module or the policy distribution module, wherein there can be three distribution policies:
   1) a message from a certain IP address + port is designated to be distributed to a certain service processing module;
   2) a forwarding policy according to whether some attribute fields are contained in the message; and
   3) a forwarding policy according to the value of an attribute field carried in the message.
Step S803: the AAA server receives a service access request message sent by an access network.
Step S804: the bottom layer interface module performs initial analysis and filter for the message.
Step S805: the policy distribution module distributes the message to the corresponding service processing module according to the satisfied corresponding policy conditions.
Step S806: the service processing module processes the received message and returns a result of processing the message.

It should be noted that Step S802-1 to Step S802-2 may be configured in a reverse sequence.

To sum up, the solutions provided by the embodiments of the disclosure only use one AAA server to realize access and charging service of different terminals under multiple network modes. The distribution policies are flexible and configurable, and can be configured through the configuration file of the OMC operation and maintenance module or the policy distribution module according to different requirements. The service compatibility of the AAA server in the multi-service and multi-network condition can be realized effectively, which is in line with the evolution and development trend of communication networks in the industry. Therefore, the disclosure is valuable in a wide range of applications.

It should be noted that, the steps as shown in the flowcharts of the drawings may be implemented by computer systems such as a group of codes executable by computers. In addition, although logical sequences have been shown in the flowcharts, the steps as illustrated or described may be performed according to sequences different from those illustrated or described herein in some cases.

Obviously, those skilled in the art should understand that the modules or steps of the disclosure may be implemented by general computing devices and centralized in a single computing device or distributed in a network consisting of multiple computing devices. Optionally, the modules or steps may be implemented by program codes executable by the computing devices, so that they may be stored in storage devices and executed by the computing devices, or they may be realized by being respectively made into individual integrated circuit modules or a plurality of modules or steps may be made into a single integrated circuit module. By doing so, the disclosure is not limited to any specific combination of hardware and software.

The above are only preferred embodiments of the disclosure and should not be used to limit the disclosure. For those skilled in the art, the disclosure may have various modifications and changes. Any modifications, equivalent replacements, improvements and the like within the spirit and principle of the disclosure shall fall within the scope of protection of the disclosure.

## Claims

1. An Authentication Authorization and Accounting (AAA) server, **characterized by** comprising: a bottom layer interface module, a policy distribution module and a plurality of service processing modules, wherein
the bottom layer interface module is configured to provide a message transmission interface between the policy distribution module and access networks of different network modes;
the policy distribution module is configured to distribute messages from the access networks of different network modes to different service processing modules of the plurality of service processing modules; and
each service processing module of the plurality of service processing modules is configured to perform access processing for a received message.

2. The AAA server according to claim 1, **characterized in that** the policy distribution module comprises:
a searching module, configured to search in a preconfigured corresponding relationship between the plurality of service processing modules and attribute information of the messages, for a service processing module corresponding to the message from an access network; and
a sending module, configured to send the message to the service processing module found by the searching module.

3. The AAA server according to claim 2, **characterized in that** the attribute information comprises: address information of the message, wherein the address information comprises at least one of: an IP address and a port.

4. The AAA server according to any one of claims 1 to 3, **characterized in that** the policy distribution module comprises:
a determination module, configured to, according to an attribute field indicating the network mode of the access network in the message, determine the service processing module corresponding to the message; and
a sending module, configured to send the message to the service processing module determined by the determination module.

5. The AAA server according to claim 4, **characterized in that** the determination module comprises:
a first determination module configured to determine the service processing module corresponding to the message according to a type of the attribute field; and/or
a second determination module configured to determine the service processing module corresponding to the message according to a value in the attribute field.

6. The AAA server according to claim 1, **characterized in that** the each service processing module is configured to accept starting or closing configuration of an Operations and Maintenance Center (OMC) operation and maintenance module for the each service processing module.

7. The AAA server according to claim 1, **characterized in that** the each service processing module is further configured to return a result of processing the message to the policy distribution module, and the policy distribution module is further configured to return the result of processing the message to the bottom layer interface module.

8. The AAA server according to claim 1, **characterized in that** the each service processing module of the plurality of service processing modules is connected to the policy distribution module by a Common Object Request Broker Architecture (CORBA)/Component Object Model (COM)/internal custom interface.

9. A message processing method of an Authentication Authorization and Accounting (AAA) server, **characterized by** comprising steps of:
a bottom layer interface module in the AAA server receiving messages from access networks of different network modes;
the AAA server distributing the messages from the access networks of different network modes to different service processing modules of a plurality of service processing modules; and
the plurality of service processing modules performing access processing for the received messages.

10. The method according to claim 9, **characterized in that** distributing the messages of the access networks of different network modes to different service processing modules of the plurality of service processing modules by the AAA server comprises:
searching in a preconfigured corresponding relationship between the plurality of service processing modules and attribute information of the messages, for a service processing module corresponding to a message from an access network, and sending the message to the service processing module corresponding to the message; and/or
according to an attribute field indicating the network mode of the access network in the message, determining the service processing module corresponding to the message, and sending the message to the service processing module corresponding to the message.
